# EUROPEAN PATENT SPECIFICATION

(11) **EP 1 516 474 B1**
(45) Date of publication and mention of the grant of the patent: **18.08.2010**
(21) Application number: 03743773.8
(22) Date of filing: 07.03.2003
(51) Int. Cl.: H04L 29/06

(54) **LOCAL AREA NETWORK**
LOKALES NETZWERK
RESEAU LOCAL

(30) Priority: 08.03.2002 US 362865 P
(43) Date of publication of application: 23.03.2005
(60) Divisional application: 10167434.9
(73) Proprietor: Certicom Corp., Mississauga, ON L4W 5L1 (CA)
(72) Inventor: Struik, Marinus, Toronto, Ontario, M4K 3K8 (CA); VANSTONE, Scott Alexander, Campbellville, Ontario L0P 1B0 (CA)
(74) Representative: Rickard, David John
(86) International application number: PCT/CA2003/000315
(87) International publication number: WO 2003/077498

(56) References cited:
- EP-A- 1 102 430
- US-A- 5 602 916
- VENKATRAMAN L ET AL: "A novel authentication scheme for ad hoc networks" DEPARTMENT OF ELECTRICAL AND COMPUTER ENGINEERING AND COMPUTER SCIENCE, vol. 3, 23 September 2000 (2000-09-23), pages 1268-1273, XP010532729
- JACOBS S ET AL: "MANET Authentication Architecture" INTERNET DRAFTS, March 1999 (1999-03), XP002206450 Retrieved from the Internet: <URL:http://www.watersprings.org/pub/id/dr aft-jacobs-imep-auth-arch-00.txt> [retrieved on 2002-07-17]
- HAAS Z J ET AL: "The Zone Routing Protocol (ZRP) for Ad Hoc Networks" INTERNET DRAFTS, November 1997 (1997-11), XP002153515 Retrieved from the Internet: <URL:http://www.ics.uci.edu/ãtm/adhoc/pape r-collection/haas-draft-ietf-man et-zone-zrp>

## Description

### FIELD OF THE INVENTION

This invention relates to communication networks, more particularly it relates to security within these networks.

### DESCRIPTION OF THE PRIOR ART

One of the most significant recent developments in wireless technologies is the emergence of wireless personal area networking. Wireless personal area networks WPANs™ use radio frequencies to transmit both voice and data, and are specified by standards such as IEEE standard 802.15 or 802.3 from the Institute of Electrical and Electronics Engineers Standards Association (IEEE-SA), among other specifications. The 802.15 specification is ideal for linking notebook computers, mobile phones, personal digital assistants (PDAs), digital cameras, and other handheld devices to do business at home, on the road, or in the office.

These wireless networks are formed by a number of devices joining and leaving the network in an ad hoc manner, hence such networks are known as ad hoc networks or piconets. Thus, the set of devices connected to the ad hoc network any given time may fluctuate, and so the topology of the network is dynamic. It is desirable to control access to the network and to provide a mechanism for establishing and maintaining security. Traditionally, security is established using a central device or a piconet controller (PNC) which controls access and distributes keys within the network. A drawback of this scheme is that each member of the network is required to trust the PNC.

Admission to the piconet is based on the outcome of the following protocols between the prospective joining device and the PNC of the piconet. The joining device and the PNC engage in a mutual entity authentication protocol based on public key or symmetric key techniques. The true device identity of both the joining device and the PNC is determined using this protocol. A link key can also be derived based on the authentic keys of both parties. Another protocol involves using authorization techniques between both devices, based on access control lists (ACLs). The Access Control Lists may be dynamically updated, similar to PDA functionality, where a determination is made whether an entity is added or removed from the ACL at entry. This determination may be made by an operator, such as a human operator. For devices that lack a user interface, this update mechanism may be invoked by an open enrollment period followed by a lock-up step, for example, which may be confirmed by a button push or be a simple re-set of the whole list. This may be performed by actuating a re-set or re-initialize button on the device.

Thus devices in the piconet fully depend on information provided by the PNC regarding which devices have been admitted to the piconet, since admission is based on communication between the PNC and a joining device only. If however an improper list of devices, DeviceList, in the piconet has been distributed by the PNC, either by error or maliciously, the security of the network is jeopardised. Each device has a short hand address, such as a local 8-bit ID, and a long hand address, such as a global 48-bit device ID. For example, in a piconet in which since all devices share a common broadcast key, the list of admitted devices to the piconet is L:= (local 8-bit device ID, global 48-bit device ID), then the failure to obtain the complete and authentic list of admitted devices has the following consequences:

*'Fly on the wall'* scenario:

If a device obtains an incomplete list: L' c (L' ≠ L) of admitted devices, all devices in the complementary set L\ L' are 'invisible' to the device. Hence, the device might mistakenly think it is sharing secured information only with devices from the list L', whereas actually it is unknowingly sharing with other devices of the set L as well. This obviously violates sound security practice.

*'Switchboard'* scenario':

If the binding between the local device ID and the global device ID is incorrectly received, for example if 2 entries are interchanged, a device might direct information to the improper device and so compromise the intended security. This property also holds in other settings where a key-generating party does not share complete and authentic information on the composition of the key-sharing group itself with the other members of this group. Therefore, these scenarios present a security model in which there is complete trust or a security model in which a device trusts no other device, however a hybrid model of these two models is possible.

Document from Venkatraman L. et al, "A novel authentication scheme for ad hoc networks", Deparment of Electrical and Computer Engineering and Computer Science, vol. 3, 23 September 2000, pages 1268-1273, describes a method for establishing and maintaining distributed security between a plurality of devices in an ad hoc network, where one of said devices is assigned a control function to control access by other devices to said network, the devices authenticate themselves periodically with said other devices in order to determine status of said other devices, and arrange themselves into a plurality of trust groups, each group having a group key for distribution within said trust group; nevertheless the devices do not generate the keys themselves, and no key agreement is done to establisch a secure communication channe.

The document from S. Jacobs and M.S. Corson, "Manet Authentication Architecture", Internet draft, published on March 1999, describes a distributed security system for a plurality of devices in a communication network, each of said devices being responsible for generating, distributing and controlling its own key for access to said communication network and using said keys to establish a trusted network, each device's membership to said communication network being checked periodically by other devices, in order to establish which devices are allowed access to said communication network and said trusted network. It does not describe a challenge response protocol to perform authentication among the different devices.

Accordingly it is an object of the present invention to mitigate or obviate at least one of above-mentioned disadvantages.

### SUMMARY OF THE INVENTION

In one of its aspects the invention provides a method of establishing and maintaining distributed security between a plurality of devices in an ad hoc network, the method having the steps of; associating each device with a unique device address;
assigning to one of the devices a control function to control access to the network by other devices;
each of the devices generating a public key for distribution to other devices; each of the devices authenticating itself periodically with the other devices in order to determine status of the other devices;
arranging the devices into a plurality of trust groups, each group having a group key for distribution within the trust group;
associating a trust level to each of the devices;
each of the devices using the public key and the group key to perform key agreement in order to establish a secure communication channel with the other devices in the group;
whereby each of the devices is responsible for its own security by generating, distributing its own keys to the other devices.

In another aspect, the invention provides a method of establishing and maintaining distributed security between one correspondent and another correspondent, the correspondents being members of different ad hoc networks and forming a group of communicating correspondents, the method having the steps of;
associating said one correspondent and said other correspondent with a unique device addresses;
controlling access to said different ad hoc networks;
each ad hoc network having a gateway and transferring traffic between said correspondents via the gateways;
said one correspondent generating a public key for distribution to said other correspondent;
said one correspondent authenticating itself periodically with said other correspondent in order to determine status of said other correspondent;
determining a group key for distribution to said correspondents in accordance to said step of controlling access;
associating a trust level to each correspondent; each of said correspondents using said public key and said group key for performing key agreement in order to establish said secure communication within the group;
whereby each of said correspondents is responsible for its own security by generating, distributing its own keys to said other devices.

In yet another aspect, the invention provides a distributed security system for a plurality of devices in a network, each of the devices being responsible for generating, distributing and controlling its own keys for access to the network and using the keys to establish a trusted network, each device's membership to the network being checked periodically by other devices by using a challenge response protocol to establish which devices are allowed access to the network and the trusted network.

### BRIEF DESCRIPTION OF THE DRAWINGS

These and other features of the preferred embodiments of the invention will become more apparent in the following detailed description in which reference is made to the appended drawings wherein

Figure 1 is a communication network;

Figure 2 is a group structure for a security model having different trust levels;

Figure 3 is a group structure for a security model having different trust levels;

Figure 4 is a group structure for a security model having different trust levels;

Figure 5 is a group structure for a security model having different trust levels;

Figure 6 shows communication between piconets;

Figure 7 shows a flowchart outlining steps for establishing secure communication between devices in different piconets; and

Figure 8 shows secure communication between piconets;

### DETAILED DESCRIPTION OF THE PREFERRED EMBODIMENTS

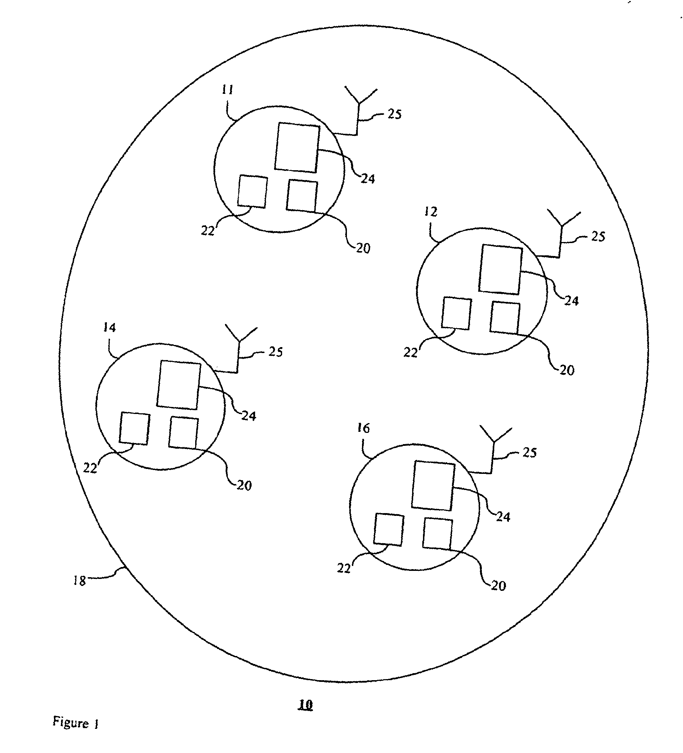

Reference is first made to Figure 1, which shows an overview of a distributed security system 10 having a plurality of communication devices 11, 12, 14, 16 in a communication network 18, in a preferred embodiment. The communication network 18 may be a wireless personal area network (WPAN^{™}) such as a piconet, in which the devices 11, 12, 14, 16 connect to each other in an ad hoc fashion. The devices 11,12, 14, 16 may be portable and mobile computing devices such as PCs, Personal Digital Assistants (PDAs), peripherals, cell phones, pagers, consumer electronics, and other handheld devices. It will be understood that such devices 11, 12, 14, 16 include addressing information to facilitate communication within the network 18. The addressing information includes a local device ID, having 8 bits for example, and a device ID, such as, an IEEE MAC Address including 48 bits. Therefore, upon a device 11, 12, 14, 16 joining the network it is assigned an unused local ID. Generally, one device 11 will act as a master or a piconet network controller (PNC), and the other devices 12, 14, 16 act as slaves for the duration of the piconet 18 connection. The PNC 11 sets a clock , a hopping pattern determined by device ID, and assigns time for connections between all devices 11, 12, 14 16. Thus, each piconet 18 includes a unique hopping pattern/ID, and the PNC 11 gives slaves 12, 14 16 the clock and a local device ID, which is optionally used in conjunction with the EEE MAC Address, to form the piconet 18.

The PNC 11 activates an access controller 20 using ID's of the devices and optionally an access control list such that devices 12, 14, 16 that have been positively authenticated and have been authorized are admitted to the piconet 18. The PNC 11 also includes a traffic controller 22 to regulate data flow within the network 18. This may be done by allocating time slots to each device 11,12,14,16 for message distribution. Each of the devices 11, 12, 14, 16 includes a security manager function 24. The security manager function 24 generates keys for communicating with other devices 11,12,14,16 within the network 18, and distributes these keys to selected device members 11,12,14,16 of the network 18. Each device 11, 12, 14 orl6 includes a transceiver 25 for establishing a communication channel with other devices 11,12,14,16. When distributing a key, the security manager function 24 also indicates to the other devices 11,12,14,16 in the network 18 the other devices 11,12,14,16 to which the key is being distributed. Thus, there is no reliance on other devices 11, 12, 14, 16 for trust functionality, as each device 11, 12, 14 or 16 need only trust itself, to form a distributed security regime.

Thus, the security manager function 24 can establish a trust set, or TrustList, which indicates which of the devices 11,12,14,16 in the network the security manager 24 of that particular device 11,12,14 or 16 is prepared to trust. The security manager function 24 may also attribute different levels of trust to each of the established trust sets. In this way the equivalent of a centralised network 18 can be established where a device 11,12,14 or 16 trusts every other device 11,12,14 or 16; or an entirely decentralised network 18 is provided where a device 11,12,14 or 16 trusts no other device 11,12,14 or 16 but itself.

Similarly the security manager 24 receiving a key from another device 11, 12, 14, 16 can determine its source and allocate to that key a level of trust that determines the functions for which the key will be used. Thus the security manager 24 may determine that the key is from a trusted party 11, 12, 14 or 16 and the key may be used to both decrypt messages received from that trusted party 11, 12, 14 or 16 and encrypt messages sent to that trusted party 11, 12, 14 or 16. Alternatively, the security manager function 24 may determine that the key originates at a party 11, 12, 14 or 16 not trusted by itself and only permit the key to be used for decryption. However, the device 11, 12, 14 or 16 may choose to ignore data, rather than going through the effort of having to decrypt the data first. This option may be useful for dealing with unsolicited communication or 'junkmail'.

The security manager 24 also includes methods of determining which of the devices 11, 12, 14 or 16 are presently active in the network 18. These methods include the functions of each device 11, 12, 14 or 16 re-authenticating itself with each of its key sharing parties 11, 12, 14 or 16 at predetermined time. One such method includes the steps of periodically performing a 'heartbeat operation' in the form of a challenge response protocol to determine which devices are presently included in the network 18, and adjusting the groups and trust levels accordingly. Thus, each device 11, 12, 14 or 16 may dynamically update its own TrustList to reflect changes in the trust relationships. For devices 11,12,14 or 16 that lack a user interface, this update mechanism may be invoked by an open enrollment period followed by a lock-up step, possibly confirmed by a button push, or it may be a simple re-set of the whole list, for example by pushing a re-set or re-initialize button on the device 11,12,14 or 16.. Moreover, some of the changes might be invoked by a third entity that performs remote or delegated trust management for that device.

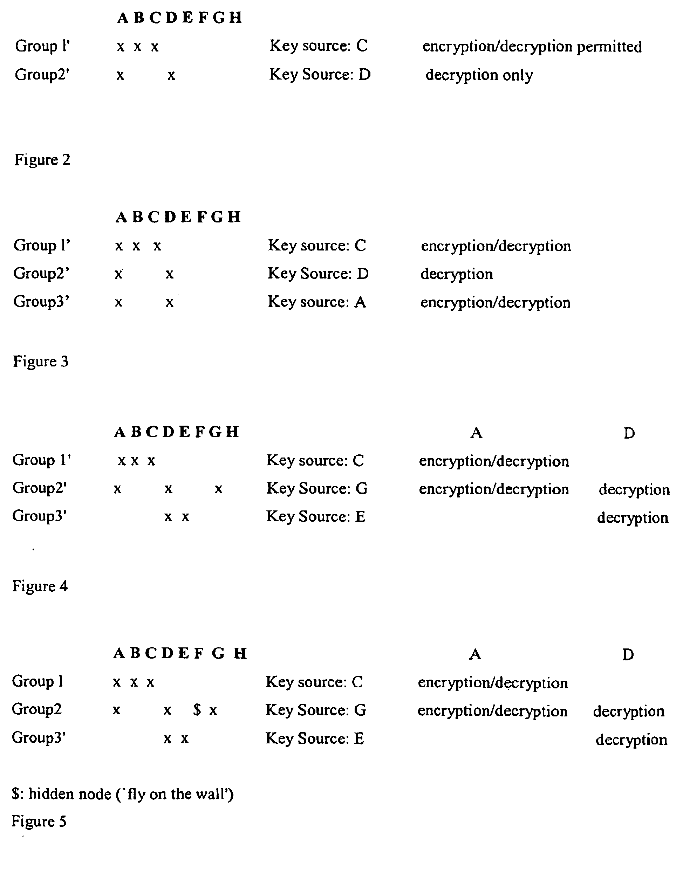

Referring now to Figure 2, in order to describe the distributed security model, as an example, assume the PNC 11 permits access to devices A, B,C,D, E, F, G, H, then the DeviceSet :={A,B,C,D,E,F,G,H}. However if the device A only trusts devices A, B, C then TrustSet(A):= {A, B, C} that is Group 1. Also, device A may participate in other groups having a different trust set, such as Group 2, having only device D. Thus the security manger function 24 of device A senses Group 1 and Group 2 with different constituent members and different levels of trust. For example, in Group 1, if device C is the key source, and since device C is part of the TrustSet(A), this key by device C is distributed which is used for both encryption/decryption permitted as C, and device A only accepts keys transferred to itself by devices DEV εTrustSet(A), for encryption and decryption purposes. In Group 2, as device D is not part of TrustSet(A), then A accepts a key from device D, and any other devices E, F,G and H, which are not part of TrustSet(A), for decryption purposes only. Accordingly if device A desires to communicate to Group2 members, the device A generates a new group key to form a new group, Group 3, and device A distributes this new group key to the members of Group2', that is device D. Therefore, the groups then under the control of the security manager of device A will then be Group 1, Group 2, as mentioned above, and Group 3, as shown Figure 3.

The flexibility of the security managers 24 of devices A, B, C, D, E, F, G, H permits different network structures to be mimicked. For example, using the notation above, if DeviceSet :={A,B,C,D,E,F,G,H}, and TrustSet(A):=Universe, then device A ca be considered an altruistic device which provides a structure equivalent to a centralized model. Conversely, if TrustSet(D):={D}, then device D is an egocentric device, and is a structure equivalent a completely decentralized model. Then, looking at Figure 4, device A participates in Groups 1, 2 and 3, all groups having with differing trust relationships. For example, in Group 1 having devices A, B and C, if the key source is device C, then this group key is used for encryption and decryption, as device A trusts all devices B,C,D,E,F,G and H, which of course includes the key source C. However, in Group 2 having devices A, D, and G, with the key source being device G, once again device A uses this group key is used for encryption and decryption, while device D uses it for decryption only as it does not trust any other device A,B,C,E,F,G or H. In Group 3 having devices D and E, with the key source being device E, device D uses the group key for decryption only as it does not trust device E. As device A is not included in Group 3, it does not receive the key.

In Figure 5, where one of the device F is hidden from the other members in the network 18, then Group 2 does not include the full list of member devices, A,D,G and H. Therefore, device D can not communicate with device F as the heartbeat operation will indicate that device D is not alive. Since the 8-bit address or the 48-bit address of device is unavailable, there is no communication between D and device F. Therefore, device D uses the group keys for decryption only.

Thus, these different group structures as shown in Figures 2, 3, 4 and 5 may be established within the same network 18 by using a decentralised or distributed security management scheme having the ability to set different levels of trust per device. This may be used in a number of ways, such as admission of devices A, B, C, D, E, F, G and H, such as PDAs to a piconet 18 based on different subscription models. For example, one subscription model may include charging a fee for airtime/bandwidth fee, while another model may be based on charging for content. In this example, the models may be implemented in a building, such as an airport or fitness club, the network 18 includes a fixed PNC 11 on a ceiling and the PNC 11 multicasting to subscribing devices only, or the models may be implemented between individual devices. Thus, by separating the role of the security manner 24 from that of the PNC 11, charging models that differentiate between airtime/bandwidth cost and content/subscription cost are possible, as these charging models might be operated by different entities A,B,C,D,E,F,G or H, or another intermediate entity.

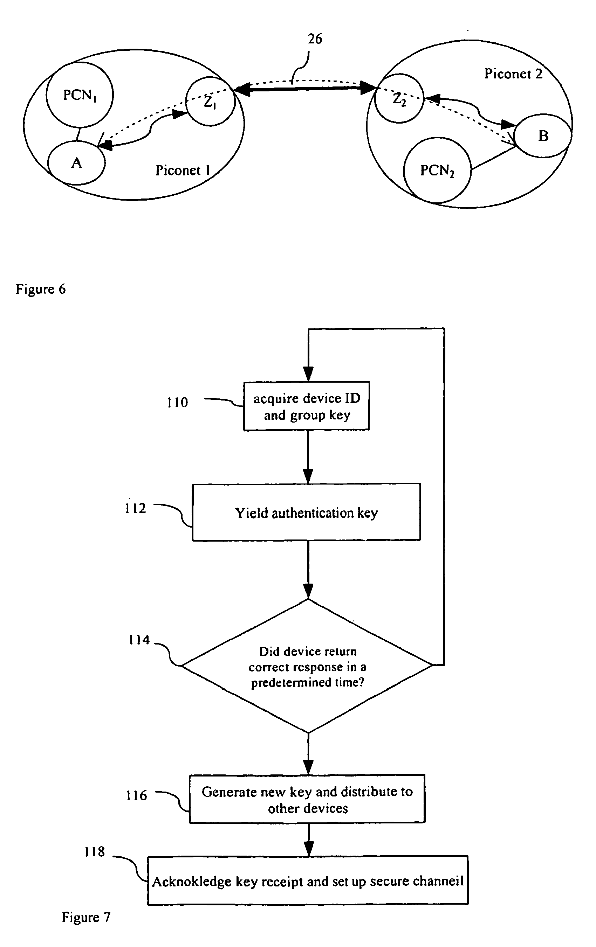

It will be seen therefore that a versatile network 18 is provided, and moreover the removal of a device A,B,C,D,E,F,G or H from the network 18 does not require reestablishment of all keys in the network 18 as the individual devices A,B,C,D,E,F,G or H control the distribution of the keys. Figure 6 shows communication between a device A in piconet 1 with another device B in piconet 2, where Z₁ and Z₂ are members of piconet 1 and piconet 2, respectively. Z₁ and Z₂ include transceivers 25 for establishing a communication channel or relay channel 26 between piconet 1 and piconet 2. Thus, Z₁ listens in on all traffic and sends all traffic destined for device B to Z₂ via the relay channel 26. Upon receipt of the traffic relayed by Z₁, Z₂ further broadcasts this traffic to B. Z₁ and Z₂ include WPAN functionality and may act as data relay agents only, and thus may not process data. Piconet 1 and piconet 2 include respective PNC₁ and PNC₂ and thus devices A and B only need PNC₁ and PNC₂ , respectively, for allocation of time slots, and the function of protection of content is performed by the security manager 24 of each device A, B.

In order to facilitate communication between devices A and B, in different piconets 1 and 2, device A is associated with a router 28 which stores information related to other devices in its piconet 1, and routing information having instructions on how to route traffic from device A to other devices, such as device B. Correspondingly, device B is also associated with a router 30 having similar functionalities. Thus, any device A or B is associated with a router and these routers 28, 30 query each other periodically in order to update router information, due to the dynamic nature of the ad hoc networks 18.

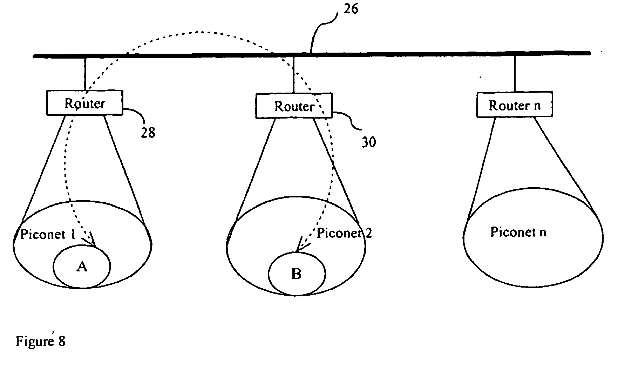

Referring to Figure 7 and Figure 8, in order to establish a secure communication between device A and B, device A performs the steps of acquiring device B's full static address or device ID and a public key or symmetric key in order to perform key agreement, in step 110. In the next step 112, the key agreement yields an authentication key for subsequent communication. Once device A receives a response, in predetermined time, that proves possession of the group public key, in step 114, then device A generates a new set of group keys and transports these keys to device B, in step 116. Device B can then acknowledge receipt of group keys in step 118. Thus, devices A and B require each other's authentic public key and each other's full device ID for authentication and establishment of a secure channel 26, as different piconets may use different short hand address addresses for each device A or B. Therefore, device A and device B form a trusted group and a secure channel is set up if device B trusts any of the intermediate routers, otherwise device B creates its own keys in order to set up a secure channel 26

Although the invention has been described with reference to certain specific embodiments, various modifications thereof will be apparent to those skilled in the art without departing from the scope of the invention as outlined in the claims appended hereto.

## Claims

1. A method of establishing and maintaining distributed security between a plurality of devices in an ad hoc network, the method having the steps of;
associating each device with a unique device address;
assigning to one of said devices a control function to control access by other devices to said network;
each of said devices generating a public key for distribution to other devices;
each of said devices authenticating itself periodically with said other devices in order to determine status of said other devices;
arranging said devices into a plurality of trust groups, each group having a group key for distribution within said trust group;
associating a trust level to each of said devices;
each of said devices using said public key and said group key to perform key agreement in order to establish a secure communication channel with said other devices in said group;
whereby each of said devices is responsible for its own security by generating, distributing its own keys to said other devices.

2. The method of claim 1 wherein said device determines a source of said group key.

3. The method of claim 2 wherein when said source is a device in said trust group then said group key is used for encryption and decryption of data transmitted between said devices.

4. The method of claim 2 wherein, when said source is a device excluded from said trust group, then said group key is used for decryption of data transmitted to said device.

5. The method of claim 1 wherein the step of determining status of said other devices includes a further step of determining which of said devices are active and capable of participating in said network.

6. The method of claim 1 wherein the step of determining status of said other devices includes a further step of using a challenge response protocol using said group key to establish whether said other devices are allowed access to said network in accordance with said control function.

7. The method of claim 1 wherein said unique device address includes a device ID or a local ID.

8. The method of claim 7 wherein said device ID is an IEEE MAC address and said local ID is an n-bit address unique to said group.

9. A method of establishing and maintaining distributed security between one correspondent and another correspondent, said correspondents being members of different ad hoc networks and forming a group of communicating correspondents, the method having the steps of;
associating said one correspondent and said other correspondent with a unique device address;
controlling access to said different ad hoc networks;
each ad hoc network having a gateway and transferring traffic between said correspondents via said gateways;
said one correspondent generating a public key for distribution to said other correspondent;
said one correspondent authenticating itself periodically with said other correspondent in order to determine status of said other correspondent;
determining a group key for distribution to said correspondents in accordance to said step of controlling access;
associating a trust level to each of said correspondents;
each of said correspondents using said public key and said group key for performing key agreement in order to establish secure communication within said group;
whereby each of said correspondents is responsible for its own security by generating, distributing its own keys to said other devices.

10. The method of claim 9 wherein said step of transferring traffic includes a further step of associating each of said correspondents with a router for storing routing information having instructions for routing traffic from said one correspondent to said other correspondent.

11. The method of claim 10 wherein said routers query each other periodically in order to update and maintain said routing information.

12. The method of claim 11 wherein said step of determining said status of said other correspondent includes a further step of using a challenge response protocol to establish whether said other correspondent is allowed access to said different ad hoc network having said one correspondent, in accordance with said control function.

13. A distributed security system for a plurality of devices in a communication network, each of said devices being responsible for generating, distributing and controlling its own keys for access to said communication network and using said keys to establish a trusted network, each device's membership to said communication network being checked periodically by other devices by using a challenge response protocol to establish which devices are allowed access to said communication network and said trusted network.

14. The system of claim 13 wherein each device includes a security manager having the functions of generating said keys and distributing said keys to selected devices in said trusted network.

15. The system of claim 14 wherein said trusted network is associated with a level of trust.

16. The system of claim 14 wherein said security manager determines a source of said keys such that said keys from a device within said trusted network may be used for encryption and decryption of data, and said keys from a device excluded from said trusted network may be used for decryption of said data.

17. The system of claim 16 wherein said security manager foregoes decrypting said data when said keys are from a device excluded from said trusted network.

18. The system of claim 15 wherein an outcome of said periodic checking is recorded by said security manager in order to maintain and update a membership list, and adjust said level of trust accordingly.

19. The system of claim 17 wherein different trusted networks may be established within said network based on differing levels of trust.

20. The system of claim 13 wherein said communication network includes a plurality of ad hoc networks and said distributed security system is established between devices in different ad hoc networks.

21. The system of claim 19 wherein each ad hoc network includes a controller to controlling access to each of said ad hoc networks, each ad hoc network having a gateway for transferring traffic therebetween, and device having a router for storing routing information having instructions for routing traffic from said one device to another device via said gateways and other routers.

## Patentansprüche

1. Verfahren zum Aufbau und Aufrechterhalten einer verteilten Sicherheit zwischen mehreren Geräten in einem Ad-hoc-Netzwerk, wobei das Verfahren folgende Schritte umfasst:
Assoziieren jedes Gerätes mit einer eindeutigen Geräteadresse;
Zuweisen einer Steuerungsfunktion an eines der Geräte, um den Zugriff anderer Geräte auf das Netzwerk zu steuern;
wobei jedes der Geräte einen öffentlichen Schlüssel zur Verteilung an andere Geräte generiert;
wobei jedes der Geräte sich selbst gegenüber den anderen Geräten regelmäßig authentifiziert, um den Status der anderen Geräte zu bestimmen;
Anordnen der Geräte in mehreren Vertrauenswürdigkeitsgruppen, wobei jede Gruppe einen Gruppenschlüssel für die Verteilung in der Vertrauenswürdigkeitsgruppe aufweist;
Assoziieren einer Vertrauenswürdigkeitsstufe mit jedem der Geräte;
wobei jedes der Geräte den öffentlichen Schlüssel und den Gruppenschlüssel zum Durchführen einer Schlüsselvereinbarung nutzt, um einen sicheren Kommunikationskanal zu den anderen Geräten in der Gruppe aufzubauen;
wobei jedes der Geräte für seine eigene Sicherheit verantwortlich ist, indem es seine eigenen Schlüssel generiert, an die anderen Geräte verteilt.

2. Verfahren nach Anspruch 1, wobei das Gerät eine Quelle des Gruppenschlüssels bestimmt.

3. Verfahren nach Anspruch 2, wobei, wenn die Quelle ein Gerät in der Vertrauenswürdigkeitsgruppe ist, dann der Gruppenschlüssel zur Verschlüsselung und Entschlüsselung von zwischen den Geräten übertragenen Daten verwendet wird.

4. Verfahren nach Anspruch 2, wobei, wenn die Quelle ein aus der Vertrauenswürdigkeitsgruppe ausgeschlossenes Gerät ist, dann der Gruppenschlüssel zur Entschlüsselung von an das Gerät übertragenen Daten verwendet wird.

5. Verfahren nach Anspruch 1, wobei der Schritt des Bestimmens des Status der anderen Geräte einen weiteren Schritt des Bestimmens umfasst, welche der Geräte aktiv und in der Lage sind, in dem Netzwerk beteiligt zu sein.

6. Verfahren nach Anspruch 1, wobei der Schritt des Bestimmens des Status der anderen Geräte einen weiteren Schritt des Nutzens eines Challenge-Response-Protokolls mittels des Gruppenschlüssels umfasst, um festzustellen, ob die anderen Geräte auf das Netzwerk gemäß der Steuerungsfunktion zugreifen dürfen.

7. Verfahren nach Anspruch 1, wobei die eindeutige Geräteadresse eine Geräte-ID oder eine lokale ID enthält.

8. Verfahren nach Anspruch 7, wobei die Geräte-ID eine IEEE-MAC-Adresse ist und die lokale ID eine für die Gruppe eindeutige n-Bit-Adresse ist.

9. Verfahren zum Aufbau und Aufrechterhalten einer verteilten Sicherheit zwischen einem Korrespondenten und einem anderen Korrespondenten, wobei die Korrespondenten zu verschiedenen Ad-hoc-Netzwerken gehören und eine Gruppe aus kommunizierenden Korrespondenten bilden, wobei das Verfahren folgende Schritte umfasst:
Assoziieren des einen Korrespondenten und des anderen Korrespondenten mit einer eindeutigen Geräteadresse;
Steuern des Zugriffs auf die verschiedenen Ad-hoc-Netzwerke;
wobei jedes Ad-hoc-Netzwerk über ein Gateway verfügt und Verkehr zwischen den Korrespondenten über die Gateways überträgt;
wobei der eine Korrespondent einen öffentlichen Schlüssel zur Verteilung an den anderen Korrespondenten generiert;
wobei der eine Korrespondent sich selbst gegenüber dem anderen Korrespondenten regelmäßig authentifiziert, um den Status des anderen Korrespondenten zu bestimmen;
Bestimmen eines Gruppenschlüssels zur Verteilung an die Korrespondenten gemäß dem Schritt der Steuerung des Zugriffs;
Assoziieren einer Vertrauenswürdigkeitsstufe mit jedem der Korrespondenten;
wobei jeder der Korrespondenten den öffentlichen Schlüssel und den Gruppenschlüssel zum Durchführen einer Schlüsselvereinbarung nutzt, um eine sichere Kommunikation innerhalb der Gruppe aufzubauen;
wobei jeder der Korrespondenten für seine eigene Sicherheit verantwortlich ist, indem er seine eigenen Schlüssel generiert, an die anderen Geräte verteilt.

10. Verfahren nach Anspruch 9, wobei der Schritt des Übertragens von Verkehr einen weiteren Schritt des Assoziierens jedes der Korrespondenten mit einem Router zum Speichern von Routing-Informationen mit Anweisungen zum Routen von Verkehr von dem einen Korrespondenten hin zu dem anderen Korrespondenten umfasst.

11. Verfahren nach Anspruch 10, wobei die Router sich regelmäßig gegenseitig abfragen, um die Routing-Informationen zu aktualisieren und pflegen.

12. Verfahren nach Anspruch 11, wobei der Schritt des Bestimmens des Status des anderen Korrespondenten einen weiteren Schritt des Nutzens eines Challenge-Response-Protokolls umfasst, um festzustellen, ob der andere Korrespondent auf das andere Ad-hoc-Netzwerk mit dem einen Korrespondenten gemäß der Steuerungsfunktion zugreifen darf.

13. System für verteilte Sicherheit für mehrere Geräte in einem Kommunikationsnetzwerk, wobei jedes der Geräte verantwortlich dafür ist, seine eigenen Schlüssel für den Zugriff auf das Kommunikationsnetzwerk zu generieren, verteilen und steuern und die Schlüssel zum Aufbau eines vertrauenswürdigen Netzwerks zu nutzen, wobei die Zugehörigkeit jedes Geräts zu dem Kommunikationsnetzwerk regelmäßig von anderen Geräten überprüft wird, indem sie ein Challenge-Response-Protokoll nutzen, um festzustellen, welche Geräte auf das Kommunikationsnetzwerk und das vertrauenswürdige Netzwerk zugreifen dürfen.

14. System nach Anspruch 13, wobei jedes Gerät einen Sicherheitsmanager mit den Funktionen des Generierens der Schlüssel und des Verteilens der Schlüssel an ausgewählte Geräte in dem vertrauenswürdigen Netzwerk enthält.

15. System nach Anspruch 14, wobei das vertrauenswürdige Netzwerk mit einer Vertrauenswürdigkeitsstufe assoziiert ist.

16. System nach Anspruch 14, wobei der Sicherheitsmanager eine Quelle der Schlüssel so bestimmt, dass die von einem Gerät in dem vertrauenswürdigen Netzwerk stammenden Schlüssel zur Verschlüsselung und Entschlüsselung von Daten verwendet werden können und die Schlüssel, die von einem aus dem vertrauenswürdigen Netzwerk ausgeschlossenen Gerät stammen, zur Entschlüsselung der Daten verwendet werden können.

17. System nach Anspruch 16, wobei der Sicherheitsmanager auf die Entschlüsselung der Daten verzichtet, wenn die Schlüssel von einem aus dem vertrauenswürdigen Netzwerk ausgeschlossenen Gerät stammen.

18. System nach Anspruch 15, wobei ein Ergebnis der regelmäßigen Überprüfung vom Sicherheitsmanager erfasst wird, um eine Liste der Zugehörigkeiten zu führen und aktualisieren und die Vertrauenswürdigkeitsstufe entsprechend anzupassen.

19. System nach Anspruch 17, wobei verschiedene vertrauenswürdige Netzwerke in dem Netzwerk basierend auf verschiedenen Vertrauenswürdigkeitsstufen aufgebaut werden können.

20. System nach Anspruch 13, wobei das Kommunikationsnetzwerk mehrere Ad-hoc-Netzwerke enthält und das System für verteilte Sicherheit zwischen Geräten in verschiedenen Ad-hoc-Netzwerken aufgebaut ist.

21. System nach Anspruch 19, wobei jedes Ad-hoc-Netzwerk einen Controller zum Steuern des Zugriffs auf jedes der Ad-hoc-Netzwerke enthält, wobei jedes Ad-hoc-Netzwerk über ein Gateway zum Übertragen von Verkehr dazwischen verfügt und das Gerät über einen Router zum Speichern von Routing-Informationen mit Anweisungen zum Routen von Verkehr von dem einen Gerät hin zu einem anderen Gerät über die Gateways und andere Router verfügt.

## Revendications

1. Un procédé d'établissement et d'entretien d'une sécurité répartie entre une pluralité de dispositifs dans un réseau ad hoc, le procédé possédant les opérations suivantes :
l'association de chaque dispositif à une adresse de dispositif unique,
l'attribution à l'un desdits dispositifs d'une fonction de commande destinée à commander l'accès par d'autres dispositifs audit réseau,
chacun desdits dispositifs générant une clé publique destinée à être distribuée à d'autres dispositifs,
chacun desdits dispositifs s'authentifiant périodiquement auprès desdits autres dispositifs afin de déterminer l'état desdits autres dispositifs,
l'agencement desdits dispositifs en une pluralité de groupes de confiance, chaque groupe possédant une clé de groupe destinée à être distribuée à l'intérieur dudit groupe de confiance,
l'association d'un niveau de confiance à chacun desdits dispositifs,
chacun desdits dispositifs utilisant ladite clé publique et ladite clé de groupe de façon à exécuter un agrément de clés afin d'établir un canal de communication sécurisé avec lesdits autres dispositifs dudit groupe,
grâce à quoi chacun desdits dispositifs est responsable de sa propre sécurité en générant et en distribuant ses propres clés auxdits autres dispositifs.

2. Le procédé selon la Revendication 1 où ledit dispositif détermine une source de ladite clé de groupe.

3. Le procédé selon la Revendication 2 où, lorsque ladite source est un dispositif dudit groupe de confiance, alors ladite clé de groupe est utilisée pour le chiffrement et le déchiffrement de données transmises entre lesdits dispositifs.

4. Le procédé selon la Revendication 2 où, lorsque ladite source est un dispositif exclu du groupe de confiance, alors ladite clé de groupe est utilisée pour le déchiffrement de données transmises audit dispositif.

5. Le procédé selon la Revendication 1 où l'opération de détermination de l'état desdits autres dispositifs comprend une autre opération de détermination des dispositifs parmi lesdits dispositifs qui sont actifs et capables de participer audit réseau.

6. Le procédé selon la Revendication 1 où l'opération de détermination de l'état desdits autres dispositifs comprend une autre opération d'utilisation d'un protocole de question-réponse au moyen de ladite clé de groupe de façon à établir si lesdits autres dispositifs sont autorisés à accéder audit réseau conformément à ladite fonction de commande.

7. Le procédé selon la Revendication 1 où ladite adresse de dispositif unique comprend un identifiant de dispositif ou un identifiant local.

8. Le procédé selon la Revendication 7 où ledit identifiant de dispositif est une adresse MAC IEEE et ledit identifiant local est une adresse à n bits unique audit groupe.

9. Un procédé d'établissement et d'entretien d'une sécurité répartie entre un correspondant et un autre correspondant, lesdits correspondants étant membres de réseaux ad hoc différents et formant un groupe de correspondants en communication, le procédé possédant les opérations suivantes :
l'association dudit un correspondant et dudit autre correspondant à une adresse de dispositif unique,
le contrôle de l'accès auxdits réseaux ad hoc différents,
chaque réseau ad hoc possédant une passerelle et transférant du trafic entre lesdits correspondants via lesdites passerelles,
ledit un correspondant générant une clé publique destinée à être distribuée audit autre correspondant,
ledit un correspondant s'authentifiant périodiquement auprès dudit autre correspondant afin de déterminer l'état dudit autre correspondant,
la détermination d'une clé de groupe destinée à être distribuée auxdits correspondants conformément à ladite opération de contrôle de l'accès,
l'association d'un niveau de confiance à chacun desdits correspondants,
chacun desdits correspondants utilisant ladite clé publique et ladite clé de groupe pour exécuter un agrément de clés afin d'établir une communication sécurisée à l'intérieur dudit groupe,
grâce à quoi chacun desdits correspondants est responsable de sa propre sécurité en générant et en distribuant ses propres clés auxdits autres dispositifs.

10. Le procédé selon la Revendication 9 où ladite opération de transfert de trafic comprend une autre opération d'association de chacun desdits correspondants à un routeur destinée à placer en mémoire des informations d'acheminement contenant des instructions destinées à acheminer du trafic dudit un correspondant audit autre correspondant.

11. Le procédé selon la Revendication 10 où lesdits routeurs s'interrogent mutuellement périodiquement afin d'actualiser et d'entretenir lesdites informations d'acheminement.

12. Le procédé selon la Revendication 11 où ladite opération de détermination dudit état dudit autre correspondant comprend une autre opération d'utilisation d'un protocole de question-réponse de façon à établir si ledit autre correspondant est autorisé à accéder audit réseau ad hoc différent possédant ledit un correspondant conformément à ladite fonction de commande.

13. Un système de sécurité réparti destiné à une pluralité de dispositifs dans un réseau de communication, chacun desdits dispositifs étant responsable de générer, distribuer et contrôler ses propres clés d'accès audit réseau de communication et d'utiliser lesdites clés pour établir un réseau de confiance, l'appartenance de chaque dispositif audit réseau de communication étant vérifiée périodiquement par d'autres dispositifs au moyen d'un protocole de question-réponse de façon à établir quels dispositifs sont autorisés à accéder audit réseau de communication et audit réseau de confiance.

14. Le système selon la Revendication 13 où chaque dispositif comprend un gestionnaire de sécurité possédant les fonctions de générer lesdites clés et de distribuer lesdites clés à des dispositifs sélectionnés dudit réseau de confiance.

15. Le système selon la Revendication 14 où ledit réseau de confiance est associé à un niveau de confiance.

16. Le système selon la Revendication 14 où ledit gestionnaire de sécurité détermine une source desdites clés de sorte que lesdites clés provenant d'un dispositif à l'intérieur dudit réseau de confiance puissent être utilisées pour le chiffrement et le déchiffrement de données, et lesdites clés provenant d'un dispositif exclu dudit réseau de confiance puissent être utilisées pour le déchiffrement desdites données.

17. Le système selon la Revendication 16 où ledit gestionnaire de sécurité renonce à déchiffrer lesdites données lorsque lesdites clés proviennent d'un dispositif exclu dudit réseau de confiance.

18. Le système selon la Revendication 15 où un résultat de ladite vérification périodique est enregistré par ledit gestionnaire de sécurité afin d'entretenir et d'actualiser une liste de membres et d'ajuster ledit niveau de confiance en conséquence.

19. Le système selon la Revendication 17 où des réseaux de confiance différents peuvent être établis à l'intérieur dudit réseau en fonction de niveaux de confiance différents.

20. Le système selon la Revendication 13 où ledit réseau de communication comprend une pluralité de réseaux ad hoc et ledit système de sécurité réparti est établi entre des dispositifs dans des réseaux ad hoc différents.

21. Le système selon la Revendication 19 où chaque réseau ad hoc comprend un contrôleur destiné à contrôler l'accès à chacun desdits réseaux ad hoc, chaque réseau ad hoc possédant une passerelle destinée à transférer du trafic entre ceux-ci, et un dispositif possédant un routeur destiné à placer en mémoire des informations d'acheminement contenant des instructions destinées à acheminer du trafic dudit un dispositif vers un autre dispositif via lesdites passerelles et d'autres voies.
